# FASCICULE DE BREVET EUROPEEN

(11) **EP 3 811 503 B1**
(45) Date de publication et mention de la délivrance du brevet: **16.04.2025**
(21) Numéro de dépôt: 19726692.7
(22) Date de dépôt: 27.05.2019
(51) Int. Cl.: H02K 9/197, H02K 5/20

(54) **MACHINE ÉLECTRIQUE REFROIDIE PAR UN LIQUIDE CALOPORTEUR DIÉLECTRIQUE**
MIT EINEM DIELEKTRISCHEN WÄRMEÜBERTRAGUNGSFLUID GEKÜHLTE ELEKTRISCHE MASCHINE
ELECTRIC MACHINE COOLED BY A DIELECTRIC HEAT TRANSFER FLUID

(30) Priorité: 22.06.2018 FR 1855542
(43) Date de publication de la demande: 28.04.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: CARBON, Alain, 78955 CARRIERES SOUS POISSY (FR); BORIE, Julien, 78280 Guyancourt (FR)
(74) Mandataire: Renault Group
(86) Numéro de dépôt international: PCT/EP2019/063684
(87) Numéro de publication internationale: WO 2019/243000

(56) Documents cités:
- FR-A- 1 233 384
- FR-A- 1 396 629
- GB-A- 2 062 361
- US-A- 6 065 297

## Description

La présente invention se rapporte de manière générale aux domaines de l'électrotechnique et de l'automobile et concerne plus précisément une machine électrique pour véhicule automobile électrique ou hybride.

Les machines électriques pour véhicule électrique ou hybride, et notamment les moteurs fournissant un couple au système de transmission d'un tel véhicule, nécessitent un système de refroidissement performant.

Un système de refroidissement connu pour moteur électrique, tel que celui décrit dans le document CN201355790, permet de refroidir au moins une partie des parties actives d'un moteur électrique, à l'aide d'un liquide diélectrique caloporteur de type huile. Un circuit de refroidissement injecte le liquide sur la partie supérieure du stator du moteur, le liquide s'écoule par gravité vers la partie inférieure du stator et est recueilli via des trous situés en partie basse du moteur, dans un réservoir.

Un tel système de refroidissement présente un inconvénient dans certaines architectures moteur sur un véhicule électrique ou hybride. En effet, lors du déplacement d'un tel véhicule, avec un tel système le liquide serait déplacé dans le réservoir d'huile lors des accélérations, des freinages ou des virages du véhicule, de telle sorte que le liquide remonterait par les trous en partie basse du moteur, et noierait une partie de l'entrefer entre le rotor et le stator. Cela résulterait en une perte de performance du moteur et une émulsion du liquide, nuisible pour un bon refroidissement du moteur et une bonne lubrification des roulements de l'arbre rotor.

Le document US6065297 décrit un refroidisseur de liquide pour une climatisation de bâtiment, dans lequel on tente d'assurer une bonne circulation de l'huile dans le circuit malgré des différences de pression peu faibles entre les points du circuit. Notamment l'huile s'évapore dans certaines parties du circuit et se dépose en différents points du circuit. Un orifice dans la paroi du compresseur aspire le gaz de refroidissement. L'orifice débouche dans un tuyau avec une valve anti-retour qui débouche dans le réservoir d'huile du refroidisseur.

Le document FR1233384 divulgue un clapet de retenue, dont le corps de clapet est logé excentriquement et est attaqué au milieu par un levier sollicité par un ressort.

Le document FR1396629 décrit un clapet de vidange automatique notamment pour vider l'eau d'un bateau.

Le document GB2062361 décrit une perceuse électrique pourvu d'un moyen empêchant l'eau de rentrer et de rester dans le carter de la perceuse.

Un des buts de l'invention est de remédier à au moins une partie des inconvénients de la technique antérieure en fournissant une machine électrique pour véhicule automobile électrique ou hybride refroidie par un liquide de refroidissement diélectrique caloporteur, qui n'ait pas de pertes de performance du fait des virages, accélérations ou freinages du véhicule.

A cette fin, l'invention propose une machine électrique pour véhicule automobile électrique ou hybride, comportant un carter apte à protéger les parties actives de ladite machine électrique, un système de refroidissement comportant des moyens de projection d'un liquide de refroidissement diélectrique caloporteur sur au moins une partie desdites parties actives, un réservoir apte à recueillir par gravité ledit liquide de refroidissement s'écoulant au travers d'au moins un orifice d'une paroi séparant lesdites parties actives et ledit réservoir, ladite machine étant caractérisée en ce qu'elle comporte au niveau dudit au moins un orifice, un volet fixé à ladite paroi et apte à occulter ledit au moins un orifice, un moyen élastique apte à ouvrir ledit volet sous l'effet de la gravité dudit liquide de refroidissement, et un moyen anti-retour apte à maintenir fermé ledit volet lorsqu'une force exercée sur ledit liquide de refroidissement dans ledit réservoir amène ledit liquide contre ledit volet.

Grâce à l'invention, le liquide de refroidissement ne remonte pas dans le carter ce qui noierait le rotor et créerait de l'émulsion. Ainsi les performances de la machine sont préservées.

Selon l'invention, ledit volet, ledit moyen élastique et ledit moyen anti-retour sont formés d'une même membrane en matière élastique fixée de part et d'autre dudit au moins un orifice et dans laquelle est réalisé ledit volet, les bords de la portion fixe de ladite membrane recouvrant les bords dudit volet, les bords dudit volet formant une descente vers ledit réservoir.

Cette implémentation de l'invention a l'avantage d'être peu coûteuse et simple à fabriquer.

Ladite membrane est de préférence en silicone, ce qui a l'avantage d'avoir une grande résistance aux températures élevées et d'avoir la déformation comme caractéristique mécanique.

Avantageusement encore, ladite membrane comporte des bords extérieurs concaves aptes à se fixer par élasticité sur les bords dudit au moins un orifice. Ainsi la membrane est simple à installer, puisqu'il suffit de la clipser sur la paroi au niveau des orifices d'écoulement du liquide de refroidissement. Cette installation ne nécessite par ailleurs pas de modification d'un carter existant d'une machine électrique selon l'art antérieur.

Selon une alternative non-revendiquée, ledit volet est disposé sous ladite paroi et est de dimensions plus importantes que celles dudit orifice, ledit moyen anti-retour comportant un ressort de rappel fixé sur une liaison pivot reliant ledit volet à ladite paroi. Cette alternative a l'avantage d'être utilisable sur des orifices d'écoulement d'huile de dimension importante, le volet étant rigide dans cette implémentation alternative.

Avantageusement, dans cette alternative ledit volet est fixé par ladite liaison pivot à un cadre fixé sur les bords dudit orifice à ladite paroi par des clips. Ainsi il est possible de bénéficier de l'invention sans modifier le carter existant d'une machine électrique selon l'art antérieur.

Préférentiellement, ledit volet et ledit cadre sont en matière plastique, ce qui a l'avantage d'être peu coûteux à réaliser.

D'autres caractéristiques et avantages apparaîtront à la lecture d'un mode de réalisation préféré décrit en référence aux figures dans lesquelles :
- la figure 1 représente une machine électrique selon l'invention,
- la figure 2 représente en détails la partie basse de la machine électrique de la figure 1,
- la figure 3 représente en coupe une membrane utilisée dans ladite partie basse,
- la figure 4 représente une vue en relief de ladite membrane,
- et la figure 5 représente une variante de réalisation de l'invention, en détails dans la partie basse d'une machine électrique selon l'invention.

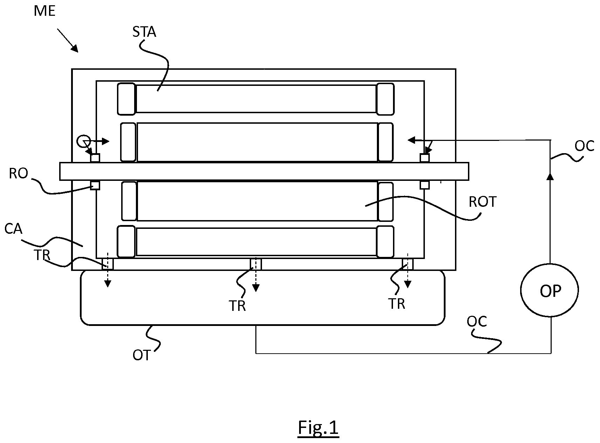

Selon un mode de réalisation préféré de l'invention représenté à la **figure 1**, une machine électrique ME selon l'invention comporte un carter CA protégeant les parties actives de la machine telles que son stator STA et son rotor ROT. La machine électrique ME est destinée à fournir du couple à la roue d'un véhicule électrique ou hybride, et nécessite donc un système de refroidissement performant.

Pour se faire, elle comporte notamment un circuit de refroidissement OC apte à faire circuler de l'huile depuis un réservoir d'huile OT, vers les parties actives de la machine électrique ME, ici vers les chignons rotoriques. L'huile est projetée en sortie du circuit d'huile OC, par des injecteurs fixés dans les parois planes du carter CA de part et d'autre de la machine électrique ME, en vis-à-vis des chignons rotoriques de la machine électrique ME. D'autres injecteurs en sortie du circuit d'huile OC projettent l'huile sur les roulements RO de l'arbre rotor, ces roulements étant fixés dans des logements de chacune des parois planes du carter CA de part et d'autre de la machine électrique ME.

L'huile projetée par ces différents injecteurs s'écoule par gravité vers la partie basse de la machine électrique ME, puis par des trous TR situés dans la paroi inférieure du carter CA, dans le réservoir d'huile OT. Une pompe OP située sur le circuit de refroidissement OC, aspire l'huile du réservoir d'huile OT et la réinjecte vers les parties actives de la machine électrique ME. Dans ce mode de réalisation de l'invention, trois orifices TR d'écoulement sont répartis régulièrement sur la paroi inférieure du carter CA, mais en variante un seul orifice TR d'écoulement central est utilisé, ce qui diminue les risques de remontée d'huile.

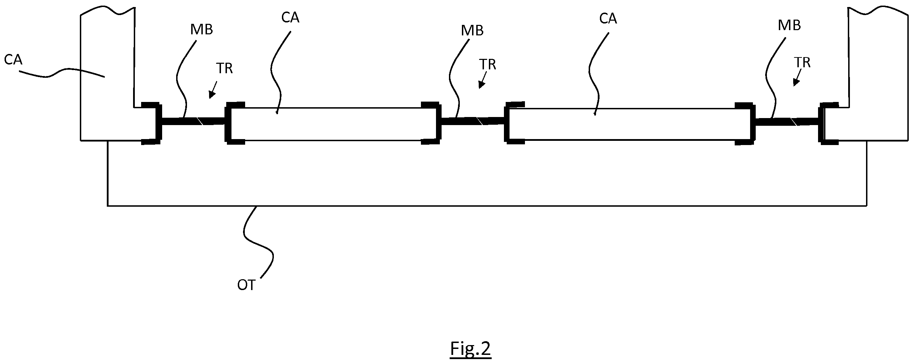

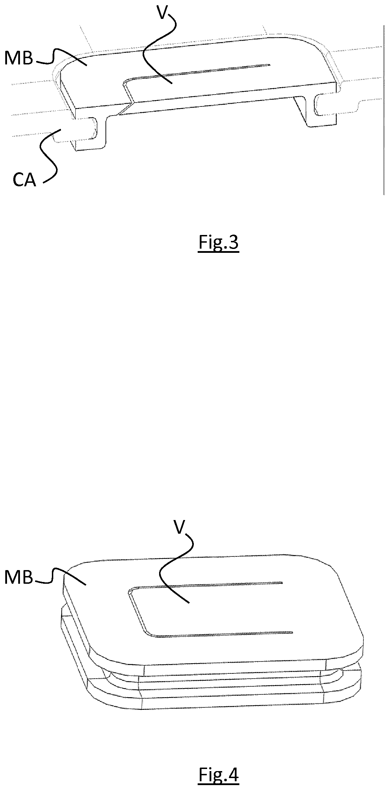

Afin d'empêcher l'huile de remonter dans l'entrefer de la machine électrique ME, des membranes MB, visibles sur la **figure 2**, occultent les orifices TR tout en permettant à l'huile de s'écouler à travers les membranes MB. L'une de ces membranes MB, en matière souple telle que du silicone ou toute matière équivalente résistante à des températures comprises entre -40°C (degré Celsius) et 120°C, est visible en détails sur les **figures 3 et 4**. Elle comporte un volet V souple qui s'abaisse vers le réservoir d'huile OT sous le poids de l'huile qui s'écoule depuis les parties actives de la machine électrique ME. Le volet V est réalisé par une découpe dans la membrane MB, ou bien par moulage en même temps que la membrane MB. Dans le sens vertical par rapport à la machine électrique ME, c'est-à-dire dans le sens d'écoulement de l'huile en régime nominal, la section du volet est réalisée en biais. Ainsi les bords du volet V forment une pente permettant l'écoulement de l'huile dans le réservoir, mais sont bloqués contre les bords correspondants du reste de la membrane MB lorsque l'huile est poussée contre la membrane MB depuis le réservoir d'huile OT, ce qui empêche sa remontée dans l'entrefer. En variante les bords du volet V ne sont pas réalisés en un biseau régulier mais forment une descente plus irrégulière, par exemple en escalier, vers le réservoir OT. La membrane MB comporte de plus des bords en forme de rail permettant son clipsage sur les bords de la paroi du carter CA au niveau des orifices TR.

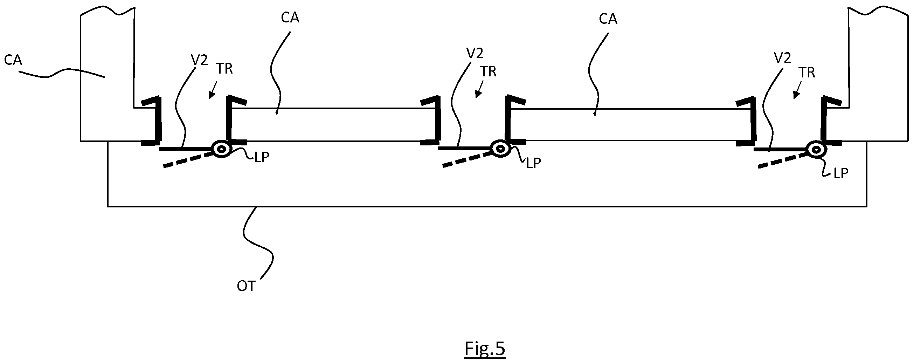

Selon une alternative de réalisation représentée en **figure 5**, un cadre en plastique est clipsé sur les bords des orifices TR. Sur un bord du cadre situé dans le réservoir, est fixé, par une liaison pivot LP, un volet V2 rigide également en plastique. Le plastique utilisé pour le volet V2 et le cadre supporte une température comprise entre -40°C et 120°C. Un ressort de rappel tarable permet de maintenir le volet V2 en contact avec le cadre. Ledit ressort est enroulé autour d'une tige centrale, ladite tige relie le volet et le cadre par une liaison charnière.

Ainsi le ressort de rappel permet l'ouverture du volet V2 et le passage de l'huile vers le réservoir OT lorsque celle-ci s'écoule depuis les parties actives de la machine ME, lorsque le véhicule roule à vitesse constante, sur une route droite. Le volet V2 est de dimensions plus importantes que l'orifice TR, ainsi lors d'un virage ou d'une accélération/décélération brusque, l'huile contenue dans le réservoir OT est plaquée contre le volet V2 qui est bloqué par les bords de la paroi du carter CA et empêche l'huile de remonter dans l'entrefer.

D'autres variantes de réalisation de l'invention sont bien sûr envisageables, par exemple un autre liquide de refroidissement diélectrique caloporteur que l'huile est utilisable.

## Revendications

1. Machine électrique (ME) pour véhicule automobile électrique ou hybride, comportant un carter (CA) apte à protéger les parties actives (ROT, STAT) de ladite machine électrique (ME), un système de refroidissement comportant des moyens de projection d'un liquide de refroidissement diélectrique caloporteur sur au moins une partie desdites parties actives, un réservoir (OT) apte à recueillir par gravité ledit liquide de refroidissement s'écoulant au travers d'au moins un orifice (TR) d'une paroi séparant lesdites parties actives et ledit réservoir (OT), ladite machine (ME) étant **caractérisée en ce qu'**elle comporte au niveau dudit au moins un orifice (TR), un volet (V) fixé à ladite paroi et apte à occulter ledit au moins un orifice (TR), un moyen élastique apte à ouvrir ledit volet (V) sous l'effet de la gravité dudit liquide de refroidissement, et un moyen anti-retour apte à maintenir fermé ledit volet (V) lorsqu'une force exercée sur ledit liquide de refroidissement dans ledit réservoir (OT) amène ledit liquide contre ledit volet (V) , ledit volet (V), ledit moyen élastique et ledit moyen anti-retour sont formés d'une même membrane (MB) en matière élastique fixée de part et d'autre dudit au moins un orifice (TR) et dans laquelle est réalisé ledit volet (V), les bords de la portion fixe de ladite membrane (MB) recouvrant les bords dudit volet (V), les bords dudit volet (V) formant une descente vers ledit réservoir (OT).

2. Machine électrique (ME) selon la revendication 2, **caractérisée en ce que** ladite membrane (MB) est en silicone.

3. Machine électrique (ME) selon l'une des revendications 2 ou 3, caractérisée en que ladite membrane (MB) comporte des bords extérieurs concaves aptes à se fixer par élasticité sur les bords dudit au moins un orifice (TR).

## Patentansprüche

1. Elektrische Maschine (ME) für ein Elektro- oder Hybridkraftfahrzeug, umfassend ein Gehäuse (CA), das dazu fähig ist, die aktiven Teile (ROT, STAT) der elektrischen Maschine (ME) zu schützen, ein Kühlsystem, das Mittel zum Spritzen einer wärmeübertragenden dielektrischen Kühlflüssigkeit auf mindestens einen Teil der aktiven Teile umfasst, einen Behälter (OT), der dazu fähig ist, die Kühlflüssigkeit, die durch mindestens eine Öffnung (TR) einer Wand, die die aktiven Teile und den Behälter (OT) trennt, fließt, durch Schwerkraft zu sammeln, wobei die Maschine (ME) **dadurch gekennzeichnet ist, dass** sie im Bereich der mindestens einen Öffnung (TR) eine Klappe (V), die an der Wand befestigt ist und dazu fähig ist, die mindestens eine Öffnung (TR) zu bedecken, ein elastisches Mittel, das dazu fähig ist, die Klappe (V) unter der Einwirkung der Schwerkraft der Kühlflüssigkeit zu öffnen, und ein rückflussverhinderndes Mittel, das dazu fähig ist, die Klappe (V) geschlossen zu halten, wenn eine auf die Kühlflüssigkeit in dem Behälter (OT) ausgeübte Kraft die Flüssigkeit gegen die Klappe (V) führt, umfasst, wobei die Klappe (V), das elastische Mittel und das rückflussverhindernde Mittel aus einer gleichen Membran (MB) aus einem elastischen Material gebildet sind, die auf beiden Seiten der mindestens einen Öffnung (TR) befestigt ist und in der die Klappe (V) eingerichtet ist, wobei die Ränder des festen Abschnitts der Membran (MB) die Ränder der Klappe (V) bedecken, wobei die Ränder der Klappe (V) ein Gefälle zu dem Behälter (OT) bilden.

2. Elektrische Maschine (ME) nach Anspruch 2, **dadurch gekennzeichnet, dass** die Membran (MB) aus Silikon ist.

3. Elektrische Maschine (ME) nach einem der Ansprüche 2 oder 3, **dadurch gekennzeichnet, dass** die Membran (MB) konkave Außenränder umfasst, die dazu fähig sind, elastisch an den Rändern der mindestens einen Öffnung (TR) befestigt zu werden.

## Claims

1. Electric machine (ME) for an electric or hybrid motor vehicle, comprising a casing (CA) designed to protect the active parts (ROT, STAT) of said electric machine (ME), a cooling system comprising means for spraying a dielectric heat-transfer cooling liquid onto at least one part of said active parts, and a reservoir (OT) designed to collect by gravity said cooling liquid flowing through at least one orifice (TR) in a wall separating said active parts and said reservoir (OT), said machine (ME) being **characterized in that** it comprises, at said at least one orifice (TR), a flap (V) fastened to said wall and designed to close off said at least one orifice (TR), an elastic means designed to open said flap (V) under the effect of the gravity of said cooling liquid, and a non-return means designed to keep said flap (V) closed when a force exerted on said cooling liquid in said reservoir (OT) brings said liquid against said flap (V), said flap (V), said elastic means and said non-return means being formed from one and the same membrane (MB) of elastic material that is fastened on either side of said at least one orifice (TR) and in which said flap (V) is produced, the edges of the fixed portion of said membrane (MB) covering the edges of said flap (V), the edges of said flap (V) forming a descent towards said reservoir (OT).

2. Electric machine (ME) according to Claim 2, **characterized in that** said membrane (MB) is made of silicone.

3. Electric machine (ME) according to either of Claims 2 and 3, **characterized in that** said membrane (MB) comprises concave outer edges designed to be fastened by elasticity to the edges of said at least one orifice (TR).
